# EUROPÄISCHE PATENTSCHRIFT

(11) **EP 2 828 557 B1**
(45) Veröffentlichungstag und Bekanntmachung des Hinweises auf die Patenterteilung: **19.10.2016**
(21) Anmeldenummer: 13702746.2
(22) Anmeldetag: 30.01.2013
(51) Int. Cl.: F16H 61/70, F16H 61/04, F16H 37/04, F16H 3/12

(54) **KRAFTFAHRZEUGANTRIEBSSTRANGVORRICHTUNG MIT EINEM MEHRGRUPPENGETRIEBE UND SCHALTVERFAHREN FÜR EIN MEHRGRUPPENGETRIEBE**
VEHICLUAR DRIVE TRAIN COMPRISING A MULTI-GROUP TRANSMISSION AND GEAR CHANGE PROCESS FOR A MULTI-GROUP TRANSMISSION
GROUPE MOTOPROPULSEUR POUR VÉHICULE COMPRENANT UNE BOÎTE DE VITESSES MULTIGROUPE ET PROCÉDÉ DE CHANGEMENT DE VITESSE POUR UNE BOÎTE DE VITESSES MULTIGROUPE

(30) Priorität: 21.03.2012 DE 102012005675
(43) Veröffentlichungstag der Anmeldung: 28.01.2015
(73) Patentinhaber: Daimler AG, 70327 Stuttgart (DE)
(72) Erfinder: HERTLEIN, Jürgen, 71384 Weinstadt (DE); KLAUS, Andreas, 71364 Winnenden (DE); ULMER, David, 71101 Schönaich (DE)
(74) Vertreter: JENSEN & SON
(86) Internationale Anmeldenummer: PCT/EP2013/000273
(87) Internationale Veröffentlichungsnummer: WO 2013/139416

(56) Entgegenhaltungen:
- EP-A2- 2 037 159
- WO-A1-2011/062544
- DE-A1- 10 152 857
- DE-A1-102007 010 827
- DE-A1-102010 009 673

## Beschreibung

Die Erfindung betrifft eine Kraftfahrzeugantriebsstrangvorrichtung nach dem Oberbegriff des Anspruchs 1 bzw. ein Schaltverfahren nach dem Oberbegriff des Ansprunchs 10.

Aus der EP 1 438 525 81 ist bereits eine Kraftfahrzeugantriebsstrangvorrichtung mit einem Mehrgruppengetriebe, das eine Hauptgruppe, eine der Hauptgruppe vorgeschaltete Vorschaltgruppe und eine der Hauptgruppe nachgeschaltete Nachschaltgruppe aufweist, und einer Steuer- und/oder Regeleinheit, die dazu vorgesehen ist, zumindest in einem Getriebegangwechselvorgang vor einem Einlegen eines Zielgangs in der Hauptgruppe die Vorschaltgruppe und die Nachschaltgruppe neutral zu schalten, bekannt.

Aus der gattungsgemäßen EP 2 037 159 A2 ist ebenfalls eine Kraftfahrzeugantriebsstrangvorrichtung mit einem Mehrgruppengetriebe, das eine Hauptgruppe, eine der Hauptgruppe vorgeschaltete Vorschaltgruppe und eine der Hauptgruppe nachgeschaltete Nachschaltgruppe aufweist, und einer Steuer- und/oder Regeleinheit, die dazu vorgesehen ist, zumindest in einem Getriebegangwechselvorgang vor einem Einlegen eines Zielgangs in der Hauptgruppe die Vorschaltgruppe und die Nachschaltgruppe neutral zu schalten, bekannt. Weiterhin ist durch diese Schrift gezeigt, dass die Steuer- und/oder Regeleinheit dazu vorgesehen ist, in dem Getriebegangwechselvorgang die Vorschaltgruppe und/oder die Nachschaltgruppe erst nach zumindest teilweiser Synchronisation der Hauptgruppe neutral zu schalten.

Der Erfindung liegt insbesondere die Aufgabe zugrunde, einen Schaltkomfort zu erhöhen. Diese Aufgabe wird gemäß der Erfindung durch die Merkmale des Anspruchs bzw. des Ansprunchs 10 gelöst. Weitere Ausgestaltungen ergeben sich aus den Unteransprüchen.

Die Erfindung geht aus von einer Kraftfahrzeugantriebsstrangvorrichtung mit einem Mehrgruppengetriebe, das eine Hauptgruppe, eine der Hauptgruppe vorgeschaltete Vorschaltgruppe und/oder eine der Hauptgruppe nachgeschaltete Nachschaltgruppe aufweist, und einer Steuer- und/oder Regeleinheit, die dazu vorgesehen ist, zumindest in einem Getriebegangwechselvorgang vor einem Einlegen eines Zielgangs in der Hauptgruppe die Vorschaltgruppe und/oder die Nachschaltgruppe neutral zu schalten.

Weiterhin wird davon ausgegangen, dass die Steuer- und/oder Regeleinheit dazu vorgesehen ist, in dem Getriebegangwechselvorgang die Vorschaltgruppe und/oder die Nachschaltgruppe erst nach zumindest teilweiser Synchronisation der Hauptgruppe neutral zu schalten. Dadurch kann ein vorteilhafter Zeitpunkt gefunden werden, um die Vorschaltgruppe und/oder die Nachschaltgruppe neutral zu schalten, wodurch wirksame Massenträgheitsmomente zum Einlegen des Zielgangs besonders vorteilhaft reduziert werden können. Es kann eine Drehzahldifferenz zwischen zu synchronisierenden Wellen und/oder Bauteilen, insbesondere zwischen einer Hauptwelle der Hauptgruppe und einer Vorgelegewelle, bei der ein Einlegen eines Zielgangs, insbesondere eines entgegen einer aktuellen Fahrtrichtung gerichteten Getriebegangs, ohne zumindest signifikante Komforteinbußen möglich ist, erhöht werden, wodurch eine Synchronisierung des Mehrgruppengetriebes zum Einlegen des Zielgangs, insbesondere des entgegen der aktuellen Fahrtrichtung gerichteten Getriebegangs, verbessert und ein Ratschen und/oder ein Einlegeschlag zumindest reduziert werden können. Dadurch kann insbesondere das Einlegen des entgegen der aktuellen Fahrtrichtung gerichteten Getriebegangs und/oder das Schalten des entgegen der aktuellen Fahrtrichtung gerichteten Getriebegangs verbessert werden. Weiter kann eine Wahrscheinlichkeit einer Zahn-auf-Zahn-Stellung reduziert werden. Dadurch kann ein Schaltkomfort des Zielgangs und eine Kundenzufriedenheit erhöht werden.

Unter einem "Mehrgruppengetriebe" soll insbesondere ein Getriebe verstanden werden, das aus einer Kombination von ein-, zwei- oder mehrstufigen Einzelgetrieben aufgebaut ist. Unter einer "Hauptgruppe" soll insbesondere ein Einzelgetriebe verstanden werden, das zu einer Bereitstellung und/oder einer Einstellung zumindest eines Vorwärtsgetriebegangs und zumindest eines Rückwärtsgetriebegangs vorgesehen ist und/oder zumindest zwei einstellbare Übersetzungen aufweist, die entgegengesetzt zueinander gerichtet sind und sich somit in einem Vorzeichen unterscheiden. Unter einer "Nachschaltgruppe" soll insbesondere ein der Hauptgruppe nachgeschaltetes Einzelgetriebe verstanden werden, das zu einer Erweiterung einer Gangzahl zumindest zwei unterschiedliche Übersetzungen bereitstellt und/oder das zu einer Bereitstellung eines schnellen und eines langsamen, mittels der Hauptgruppe bereitgestellten Getriebegangs vorgesehen ist. Unter einer "Vorschaltgruppe" soll insbesondere ein der Hauptgruppe vorgeschaltetes Einzelgetriebe verstanden werden, das zu einer Erweiterung einer Gangzahl zumindest zwei unterschiedliche Übersetzungen bereitstellt. Eine Übersetzung kann vorzugsweise auch 1 betragen. Unter "vorgeschaltet" und "nachgeschaltet" soll insbesondere bezüglich eines Kraftflusses verstanden werden, der bei durch eine Antriebsmaschine angetriebenen Antriebsrädern und/oder einer aktiven, d.h. vorzugsweise antriebsmomentbereitstellenden Antriebsmaschine, die antriebstechnisch an das Mehrgruppengetriebe angebunden ist, vorliegt. Unter einer "Steuer- und/oder Regeleinheit" soll insbesondere eine Einheit mit zumindest einem Steuergerät verstanden werden. Unter einem "Steuergerät" soll insbesondere eine Einheit mit einer Prozessoreinheit und mit einer Speichereinheit sowie mit einem in der Speichereinheit gespeicherten Betriebsprogramm verstanden werden. Grundsätzlich kann die Steuer- und/oder Regeleinheit mehrere untereinander verbundene Steuergeräte aufweisen, die vorzugsweise dazu vorgesehen sind, über ein Bus-System, wie insbesondere ein CAN-Bus-System, miteinander zu kommunizieren. Unter einem "Getriebegangwechselvorgang" soll insbesondere ein Vorgang verstanden werden, in dem ausgehend von einem aktuell eingelegten Getriebegang, d.h. vorzugsweise einem Istgang während einer Fahrt ein Zielgang geschaltet wird, wobei der Vorgang vorteilhaft durch einen von einem Fahrer eines die Kraftfahrzeugantriebsstrangvorrichtung aufweisenden Kraftfahrzeugs und/oder von der Steuer- und/oder Regeleinheit ausgelösten Schaltbefehl eingeleitet wird. Unter einem "Einlegen eines Zielgangs" soll insbesondere ein Einstellen einer, dem entsprechenden Zielgang zugeordneten Übersetzung innerhalb der Hauptgruppe und/oder ein Herstellen einer drehmomentübertragenden Verbindung zwischen allen für den entsprechenden Zielgang vorgesehenen Kopplungseinheiten der Hauptgruppe verstanden werden. Vorzugsweise erfolgt das Einlegen des Zielgangs durch die Hauptgruppe. Unter einem "Schalten eines Zielgangs" soll insbesondere ein Einstellen einer drehmomentübertragenden Verbindung zwischen einer Antriebsmaschine und Antriebsrädern des Kraftfahrzeugs bei eingelegtem Zielgang verstanden werden. Vorzugsweise beinhaltet ein Vorgang, in dem der Zielgang geschaltet wird, einen Vorgang, in dem der Zielgang eingelegt wird. Das Schalten des Zielgangs beinhaltet vorzugsweise ein Auslegen eines Istgangs, das Einlegen des entsprechenden Zielgangs und abschließend ein Schließen einer Anfahrkupplung zur Herstellung der drehmomentübertragenden Verbindung zwischen der Antriebsmaschine und den Antriebsrädern.

Unter einer "neutral geschalteten Vorschaltgruppe" soll insbesondere ein Betätigungszustand der Vorschaltgruppe verstanden werden, in dem eine Momentenübertragung durch die Vorschaltgruppe verhindert ist, wobei die Vorschaltgruppe dazu vorzugsweise eine definierte Neutralstellung aufweist oder in eine Stellung gebracht werden kann, in der die Momentenübertragung verhindert ist. Bei einer neutral geschalteten Vorschaltgruppe ist die Hauptgruppe vorzugsweise von einer Getriebeeingangswelle antriebstechnisch entkoppelt. Unter einer "neutral geschalteten Nachschaltgruppe" soll insbesondere ein Betätigungszustand der Nachschaltgruppe verstanden werden, in der eine Momentenübertragung durch die Nachschaltgruppe verhindert ist, wobei die Nachschaltgruppe dazu vorzugsweise eine definierte Neutralstellung aufweist oder in eine Stellung gebracht werden kann, in der die Momentenübertragung verhindert ist. Bei einer neutral geschalteten Nachschaltgruppe ist die Hauptgruppe vorzugsweise von einer Getriebeausgangswelle antriebstechnisch entkoppelt. Unter einem "Schalten nach zumindest teilweiser Synchronisation der Hauptgruppe" soll insbesondere ein Schalten bei einer zumindest teilweise synchronisierten Hauptgruppe und/oder nach einem Beginn einer Synchronisierphase der Hauptgruppe verstanden werden, wobei die Synchronisation und/oder die Synchronisierphase vorzugsweise auch bereits abgeschlossen sein können. Unter einer "Synchronisation der Hauptgruppe" soll insbesondere eine Drehzahlanpassung zwischen zumindest zwei zu synchronisierenden Wellen, vorzugsweise einer Hauptwelle und einer Vorgelegewelle, und/oder Bauteilen, vorzugsweise Klauen, der Hauptgruppe verstanden werden. Vorzugsweise verzögert die Steuer- und/oder Regeleinheit das neutral Schalten der Vorschaltgruppe und/oder der Nachschaltgruppe bis zu einem Zeitpunkt, in dem die Hauptgruppe zumindest teilweise synchronisiert ist. Unter einem "entgegen der aktuellen Fahrtrichtung gerichteten Getriebegang" soll insbesondere ein Zielgang verstanden werden, der für eine Fahrtrichtung vorgesehen ist, die entgegengesetzt zu einer Fahrtrichtung orientiert ist, für die ein bei einer Anforderung des Zielgangs geschalteter Istgang vorgesehen ist. Vorzugsweise ist der als der entgegen der aktuellen Fahrtrichtung gerichtete Getriebegang ausgebildete Zielgang bei einem eingelegten Vorwärtsgetriebegang und damit bei einer Vorwärtsfahrt als der Rückwärtsgetriebegang und bei einem eingelegten Rückwärtsgetriebegang und damit bei einer Rückwärtsfahrt als der Vorwärtsgetriebegang ausgebildet. Der Begriff "Vorwärtsgetriebegang" umfasst grundsätzlich alle mittels des Mehrgruppengetriebes schaltbaren Vorwärtsgetriebegänge, insbesondere einen für die Vorwärtsfahrt vorgesehenen Anfahrgetriebegang und damit einen sogenannten ersten Vorwärtsgetriebegang. Der Begriff "Rückwärtsgetriebegang" umfasst grundsätzlich alle mittels des Mehrgruppengetriebes schaltbaren Rückwärtsgetriebegänge, insbesondere einen für die Rückwärtsfahrt vorgesehenen Anfahrgetriebegang. Unter einer "aktuellen Fahrtrichtung" soll insbesondere eine Fahrtrichtung verstanden werden, in die sich das Kraftfahrzeug bei Einleitung des Getriebegangwechselvorgangs und damit beim Schaltbefehl und/oder bei Anforderung des Zielgangs fortbewegt. Unter "vorgesehen" soll insbesondere speziell programmiert, ausgelegt, ausgestattet, ausgestaltet und/oder angeordnet verstanden werden.

Erfindungsgemäß wird vorgeschlagen, dass die Steuer- und/oder Regeleinheit dazu vorgesehen ist, in dem Getriebegangwechselvorgang die Nachschaltgruppe bei neutral geschalteter Vorschaltgruppe zu schalten. Dadurch kann das Massenträgheitsmoment beim Schalten der Nachschaltgruppe reduziert werden, wobei gleichzeitig das Hauptgetriebe bzw. die Hauptgruppe geschaltet ist. Vorzugsweise schaltet die Steuer- und/oder Regeleinheit die Nachschaltgruppe nach dem Einlegen des Zielgangs bei neutral geschalteter Vorschaltgruppe in ihre Zielstellung.

Weiter wird vorgeschlagen, dass die Steuer- und/oder Regeleinheit dazu vorgesehen ist, in dem Getriebegangwechselvorgang die Vorschaltgruppe und/oder die Nachschaltgruppe erst kurz vor dem Einlegen des Zielgangs neutral zu schalten. Dadurch kann die Vorschaltgruppe und/oder die Nachschaltgruppe in einem besonders vorteilhaften Zeitpunkt neutral geschaltet werden. Vorzugsweise verzögert die Steuer- und/oder Regeleinheit das neutral Schalten der Vorschaltgruppe und/oder der Nachschaltgruppe bis kurz vor dem Einlegen des Zielgangs. Unter "kurz vor dem Einlegen des Zielgangs" soll insbesondere maximal 0,5 Sekunden, vorteilhaft maximal 0,2 Sekunden und besonders vorteilhaft maximal 0,1 Sekunden vor dem Einlegen des Zielgangs verstanden werden. Das Einlegen des Zielgangs in der Hauptgruppe und das neutral Schalten der Vorschaltgruppe und/oder der Nachschaltgruppe liegen vorzugsweise in einem Zeitfenster von maximal 0,5 Sekunden, vorteilhaft maximal 0,2 Sekunden und besonders vorteilhaft maximal 0,1 Sekunden.

Ferner wird vorgeschlagen, dass die Steuer- und/oder Regeleinheit dazu vorgesehen ist, in dem Getriebegangwechselvorgang die Vorschaltgruppe und/oder die Nachschaltgruppe während einer Synchronisierphase der Hauptgruppe neutral zu schalten, wodurch der Zielgang besonders schnell geschaltet werden kann. Unter einer "Synchronisierphase" soll insbesondere eine Phase in dem Getriebegangwechselvorgang verstanden werden, in der die Hauptgruppe zum Einlegen des Zielgangs synchronisiert wird. Vorzugsweise schaltet die Steuer- und/oder Regeleinheit die Vorschaltgruppe und/oder die Nachschaltgruppe kurz vor oder bei Beendigung der Synchronisierphase neutral. Grundsätzlich kann die Steuer- und/oder Regeleinheit die Vorschaltgruppe und/oder die Nachschaltgruppe erst kurz nach der Synchronisierphase neutral schalten.

Weiter ist es vorteilhaft, wenn die Steuer- und/oder Regeleinheit dazu vorgesehen ist, in dem Getriebegangwechselvorgang nach dem Einlegen des Zielgangs zuerst die Nachschaltgruppe und dann die Vorschaltgruppe in eine Zielstellung zu schalten. Dadurch kann ein besonders vorteilhafter Getriebegangwechselvorgang bereitgestellt werden. Unter einer "Zielstellung der Nachschaltgruppe" soll insbesondere eine Schaltstellung der Nachschaltgruppe verstanden werden, in der ein Moment durch die Nachschaltgruppe übertragen wird. Unter einer "Zielstellung der Vorschaltgruppe" soll insbesondere eine Schaltstellung der Vorschaltgruppe verstanden werden, in der ein Moment durch die Vorschaltgruppe übertragen wird.

Ferner ist es vorteilhaft, wenn die Steuer- und/oder Regeleinheit dazu vorgesehen ist, in dem Getriebegangwechselvorgang die Vorschaltgruppe und/oder die Nachschaltgruppe bei neutral geschalteter Hauptgruppe neutral zu schalten. Dadurch kann der Getriebegangwechselvorgang weiter verbessert werden. Unter einer "neutral geschalteten Hauptgruppe" soll insbesondere verstanden werden, dass ein eingelegter Getriebegang innerhalb der Hauptgruppe fehlt. Die Steuer- und/oder Regeleinheit schaltet die Vorschaltgruppe und/oder die Nachschaltgruppe vorteilhaft bei einem ausgelegten Getriebegang und/oder nach einem Auslegen des Istgangs neutral.

Ferner ist es vorteilhaft, wenn die Kraftfahrzeugantriebsstrangvorrichtung eine Synchronisiereinheit aufweist, die dazu vorgesehen ist, zu einer Synchronisierung der Hauptgruppe ein Brems- und/oder ein Antriebsmoment bereitzustellen. Dadurch kann die Hauptgruppe besonders vorteilhaft synchronisiert werden. Vorteilhaft steuert die Steuer- und/oder Regeleinheit die Synchronisiereinheit zur Synchronisierung der Hauptgruppe an. Vorzugsweise schaltet die Steuer- und/oder Regeleinheit die Vorschaltgruppe und/oder die Nachschaltgruppe während dem Ansteuern der Synchronisiereinheit neutral. Unter einem "Ansteuern der Synchronisiereinheit" soll insbesondere ein Einstellen des Brems- und/oder des Antriebsmoments größer Null verstanden werden.

Besonders bevorzugt ist die Hauptgruppe als eine unsynchronisierte Klauenkupplungsgetriebegruppe ausgebildet. Dadurch kann ein kostengünstiges Mehrgruppengetriebe bereitgestellt werden. Unter einer "Klauenkupplungsgetriebegruppe" soll insbesondere ein Einzelgetriebe verstanden werden, das zu einer Einstellung der entsprechenden Übersetzungen als Klauenkupplungen und/oder Klauenbremsen ausgebildete Kopplungseinheiten aufweist. Die Hauptgruppe weist vorteilhaft zum Einlegen der Getriebegänge unsynchronisierte, d.h. synchrongliederfreie, formschlüssige Klauenkupplungen auf, die vorzugsweise mittels einer Schiebemuffe geschlossen und geöffnet werden.

Ferner ist es vorteilhaft, wenn die Vorschaltgruppe und/oder die Nachschaltgruppe synchronisiert ausgebildet sind, wodurch ein Schaltkomfort weiter erhöht werden kann. Unter einer "synchronisiert ausgebildeten Vorschaltgruppe" soll insbesondere eine Vorschaltgruppe verstanden werden, die zum Einstellen der entsprechenden Übersetzung synchronisierte, d.h. Synchronglieder aufweisende, formschlüssige Kopplungseinheiten, vorzugsweise Klauenkupplungen, aufweist, die vorzugsweise mittels einer Schiebemuffe geschlossen und geöffnet werden. Unter einer "synchronisiert ausgebildeten Nachschaltgruppe" soll insbesondere eine Nachschaltgruppe verstanden werden, die zum Einstellen der entsprechenden Übersetzung synchronisierte, d.h. Synchronglieder aufweisende, formschlüssige Kopplungseinheiten, vorzugsweise Klauenkupplungen, aufweist, die vorzugsweise mittels einer Schiebemuffe geschlossen und geöffnet werden.

Außerdem wird ein Schaltverfahren nach Ansprunch 10 vorgeschlagen.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine Kraftfahrzeugantriebsstrangvorrichtung mit einem Mehrgruppengetriebe schematisiert dargestellt,
- Fig. 2: einen gemessenen Schaltablauf bei einem Getriebegangwechsel bei Fahrt von einem Vorwärtsgetriebegang in einen Rückwärtsgetriebegang und
- Fig. 3: einen prinzipiellen Schaltablauf bei dem Getriebegangwechsel gemäß Figur 2.

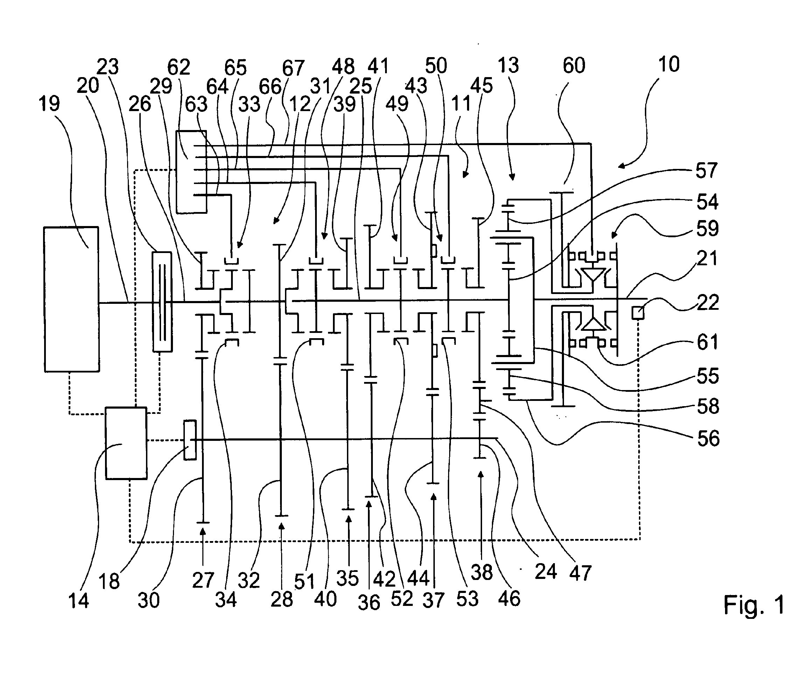

Die Figur 1 zeigt schematisiert einen Kraftfahrzeugantriebsstrang eines nicht näher dargestellten Kraftfahrzeugs mit einer Kraftfahrzeugantriebsstrangvorrichtung. Zu einer Einstellung mehrerer Getriebegänge weist die Kraftfahrzeugantriebsstrangvorrichtung ein Mehrgruppengetriebe 10 auf. Das Mehrgruppengetriebe 10 stellt 16 Getriebegänge bereit Zu einer Bereitstellung eines Antriebsmoments weist der Kraftfahrzeugantriebsstrang eine Antriebsmaschine 19 auf. Die Antriebsmaschine 19 ist der Kraftfahrzeugantriebsstrangvorrichtung vorgeschaltet. Ferner weist der Kraftfahrzeugantriebsstrang nicht näher dargestellte Antriebsräder auf. Die Antriebsmaschine 19 ist als eine Brennkraftmaschine ausgebildet. Das Kraftfahrzeug ist als ein Lastkraftfahrzeug ausgebildet. Das Mehrgruppengetriebe 10 ist als ein Lastkraftfahrzeuggetriebe ausgebildet. Es ist als ein Automatikgetriebe ausgebildet. Grundsätzlich kann das Mehrgruppengetriebe 10 auch eine andere, dem Fachmann als sinnvoll erscheinende Anzahl an Getriebegängen bereitstellen.

Zur Einleitung des Antriebsmoments in das Mehrgruppengetriebe 10 weist die Kraftfahrzeugantriebsstrangvorrichtung eine Antriebswelle 20 auf. Die Antriebswelle 20 verbindet das Mehrgruppengetriebe 10 mit der Antriebsmaschine 19. Zur Ausleitung eines durch eine Getriebegesamtübersetzung übersetzten Antriebsmoments weist die Kraftfahrzeugantriebsstrangvorrichtung eine Getriebeausgangswelle 21 auf. Die Getriebeausgangswelle 21 verbindet das Mehrgruppengetriebe 10 über ein nicht näher dargestelltes Achsgetriebe mit den Antriebsrädern. Zu einer Erkennung einer aktuellen Fahrtrichtung und zu einem Abgleichen mit einer gewünschten Fahrtrichtung weist die Kraftfahrzeugantriebsstrangvorrichtung einen Drehzahlsensor 22 mit einer Drehrichtungserkennung auf. Der Drehzahlsensor 22 ist an der Getriebeausgangswelle 21 angeordnet. Er erfasst eine Drehzahl und eine Drehrichtung der Getriebeausgangswelle 21.

Zu einem Herstellen und einem Lösen einer antriebstechnischen Verbindung zwischen der Antriebsmaschine 19 und dem Mehrgruppengetriebe 10 weist die Kraftfahrzeugantriebsstrangvorrichtung eine Anfahrkupplung 23 auf. Die Anfahrkupplung 23 ist als eine Lamellenkupplung ausgebildet. Die Anfahrkupplung 23 weist einen offenen Zustand und einen geschlossenen Zustand auf. In dem offenen Zustand ist die Anfahrkupplung 23 drucklos. In dem offenen Zustand der Anfahrkupplung 23 ist die antriebstechnische Verbindung zwischen der Antriebsmaschine 19 und dem Mehrgruppengetriebe 10 gelöst. Es kann kein Antriebsmoment von der Antriebsmaschine 19 in das Mehrgruppengetriebe 10 übertragen werden. In dem geschlossenen Zustand ist die Anfahrkupplung 23 mit einem Druck beaufschlagt. In dem geschlossenen Zustand der Anfahrkupplung 23 ist die antriebstechnische Verbindung zwischen der Antriebsmaschine 19 und dem Mehrgruppengetriebe 10 hergestellt. Das Antriebsmoment kann von der Antriebsmaschine 19 in das Mehrgruppengetriebe 10 eingeleitet werden. Die Antriebsmaschine 19 ist der Anfahrkupplung 23 vorgeschaltet.

Das Mehrgruppengetriebe 10 weist eine Hauptgruppe 11, eine Vorschaltgruppe 12 und eine Nachschaltgruppe 13 auf. Die Vorschaltgruppe 12 ist der Hauptgruppe 11 vorgeschaltet. Die Nachschaltgruppe 13 ist der Hauptgruppe 11 nachgeschaltet. Die Hauptgruppe 11 stellt vier verschiedene Vorwärtsgetriebegänge und einen Rückwärtsgetriebegang bereit. Die Hauptgruppe 11 umfasst eine Vorgelegewelle 24. Die Vorgelegewelle 24 ist parallel zu der Antriebswelle 20 angeordnet. Die Hauptgruppe 11 weist eine Hauptwelle 25 auf, die koaxial zu der Antriebswelle 20 angeordnet ist. Die Hauptgruppe 11 ist als ein Hauptgetriebe ausgebildet. Die Hauptwelle 25 ist koaxial zu der Getriebeausgangswelle 21 angeordnet. Die Hauptgruppe 11 ist den Antriebsrädern vorgeschaltet. Die Hauptgruppe 11 ist in einer Vorgelegewellenbauweise ausgeführt.

Die Vorschaltgruppe 12 weist eine Getriebeeingangswelle 26 auf, die koaxial zu der Antriebswelle 20 angeordnet ist. Die Getriebeeingangswelle 26 bindet das Mehrgruppengetriebe 10 an die Anfahrkupplung 23 an. Die Vorschaltgruppe 12 ist über die Vorgelegewelle 24 an die Hauptgruppe 11 anbindbar. Die Vorschaltgruppe 12 ist der Anfahrkupplung 23 nachgeschaltet. Zur Bereitstellung einer Wirkverbindung der Getriebeeingangswelle 26 mit der Vorgelegewelle 24 umfasst die Vorschaltgruppe 12 zwei verschiedene Zahnradpaarungen 27, 28. Die Zahnradpaarungen 27, 28 weisen unterschiedliche Übersetzungen auf. Die Zahnradpaarung 27 weist ein auf der Getriebeeingangswelle 26 drehbar angeordnetes Losrad 29 und ein auf der Vorgelegewelle 24 drehfest angeordnetes Festrad 30 auf. Die Zahnradpaarung 28 weist ein auf der Hauptwelle 25 drehbar angeordnetes Losrad 31 und ein auf der Vorgelegewelle 24 drehfest angeordnetes Festrad 32 auf. Die Vorschaltgruppe 12 stellt zwei Vorschaltgruppenübersetzungen bereit. Die Vorschaltgruppe 12 übersetzt eine Drehzahl der Antriebsmaschine 19. Sie übersetzt die Drehzahl der Antriebsmaschine 19 wahlweise ins Schnelle oder ins Langsame. Die Vorschaltgruppe 12 ist als eine Splitgruppe ausgebildet.

Die Vorschaltgruppe 12 weist drei Schaltstellungen auf. Sie weist eine High-Stellung, eine Low-Stellung und eine Neutralstellung auf. In der High-Stellung stellt die Vorschaltgruppe 12 die kleinere der zwei Vorschaltgruppenübersetzungen ein. In der High-Stellung übersetzt die Vorschaltgruppe 12 die Drehzahl der Antriebsmaschine 19 ins Schnelle. In der Low-Stellung stellt die Vorschaltgruppe 12 die größere der zwei Vorschaltgruppenübersetzungen ein. In der Low-Stellung übersetzt die Vorschaltgruppe 12 die Drehzahl der Antriebsmaschine 19 ins Langsame. In der Neutralstellung verhindert die Vorschaltgruppe 12 eine Übertragung des Antriebsmoments in die Hauptgruppe 11. In der Neutralstellung der Vorschaltgruppe 12 sind die Hauptgruppe 11 und die Getriebeeingangswelle 26 antriebstechnisch voneinander getrennt. In der Neutralstellung trennt die Vorschaltgruppe 12 die Getriebeeingangswelle 26 antriebstechnisch von der Vorgelegewelle 24. In der Neutralstellung entkoppelt die Vorschaltgruppe 12 die Getriebeeingangswelle 26 von der Vorgelegewelle 24.

Zu einer Einstellung und zu einer Änderung der Vorschaltgruppenübersetzung und damit zu einer Schaltung der Vorschaltgruppe 12 weist die Vorschaltgruppe 12 eine Vorschaltgruppen-Schalteinheit 33 auf. Die Vorschaltgruppen-Schalteinheit 33 weist Kopplungseinheiten auf, die zu einer Herstellung einer drehmomentübertragenden Verbindung zwischen der Getriebeeingangswelle 26 und der Vorgelegewelle 24 über die entsprechende Zahnradpaarung 27, 28 vorgesehen sind. Die Vorschaltgruppe 12 ist synchronisiert ausgebildet. Sie ist synchronisiert schaltbar. Die Vorschaltgruppen-Schalteinheit 33 weist hierzu nicht näher dargestellte Synchronglieder auf. Die Kopplungseinheiten sind als synchronisierte Klauenkupplungen ausgebildet.

Zur Schaltung der High-Stellung, der Low-Stellung und der Neutralstellung weist die Vorschaltgruppen-Schalteinheit 33 eine erste Schaltstellung, eine zweite Schaltstellung und eine Neutralstellung auf. In der ersten Schaltstellung verbindet die Vorschaltgruppen-Schalteinheit 33 das Losrad 29 drehfest mit der Getriebeeingangswelle 26. In der ersten Schaltstellung verbindet die Vorschaltgruppen-Schalteinheit 33 die Getriebeeingangswelle 26 über die Zahnradpaarung 27 drehmomentübertragend mit der Vorgelegewelle 24. In der zweiten Schaltstellung verbindet die Vorschaltgruppen-Schalteinheit 33 das Losrad 31 drehfest mit der Getriebeeingangswelle 26. In der zweiten Schaltstellung verbindet die Vorschaltgruppen-Schalteinheit 33 die Getriebeeingangswelle 26 über die Zahnradpaarung 28 drehmomentübertragend mit der Vorgelegewelle 24. In der Neutralstellung ist keines der Losräder 29, 31 mit der Getriebeeingangswelle 26 verbunden und es kann kein Moment von der Vorschaltgruppe 12 auf die Vorgelegewelle 24 übertragen werden. Zur Schaltung der Vorschaltgruppe 12 weist die Vorschaltgruppen-Schalteinheit 33 eine Schaltmuffe 34 auf. Die Schaltmuffe 34 ist bezüglich der Getriebeeingangswelle 26 axial verschiebbar. Die Vorschaltgruppen-Schalteinheit 33 ist druckgesteuert. Die Vorschaltgruppe 12 ist pneumatisch schaltbar. Grundsätzlich kann die Vorschaltgruppe 12 auch hydraulisch oder elektromechanisch schaltbar ausgebildet sein.

Zur Bereitstellung einer Wirkverbindung der Hauptwelle 25 mit der Vorgelegewelle 24 umfasst die Hauptgruppe 11 vier verschiedene Zahnradpaarungen 35, 36, 37, 38. Die Zahnradpaarungen 35, 36, 37, 38 weisen unterschiedliche Übersetzungen auf. Die Zahnradpaarung 35 weist ein auf der Hauptwelle 25 drehbar angeordnetes Losrad 39 und ein auf der Vorgelegewelle 24 drehfest angeordnetes Festrad 40 auf. Die Zahnradpaarung 36 weist ein auf der Hauptwelle 25 drehbar angeordnetes Losrad 41 und ein auf der Vorgelegewelle 24 drehfest angeordnetes Festrad 42 auf. Die Zahnradpaarung 37 weist ein auf der Hauptwelle 25 drehbar angeordnetes Losrad 43 und ein auf der Vorgelegewelle 24 drehfest angeordnetes Festrad 44 auf. Die Zahnradpaarung 38 weist ein auf der Hauptwelle 25 drehbar angeordnetes Losrad 45, ein auf der Vorgelegewelle 24 drehfest angeordnetes Festrad 46 sowie ein Umkehrrad 47 auf und ist zur Bildung des Rückwärtsgetriebegangs vorgesehen.

Zu einer Einstellung und zu einer Änderung der Hauptgruppenübersetzung und damit zu einer Schaltung der Hauptgruppe 11 weist die Hauptgruppe 11 drei Hauptgruppen-Schalteinheiten 48, 49, 50 auf. Die zwei Hauptgruppen-Schalteinheiten 48, 49 sind zum Einlegen der Vorwärtsgetriebegänge und die Hauptgruppen-Schalteinheit 50 zum Einlegen des Rückwärtsgetriebegangs vorgesehen. Die Hauptgruppen-Schalteinheiten 48, 49 weisen jeweils zwei Schaltstellungen und eine Neutralstellung auf. Die Hauptgruppen-Schalteinheit 50 weist eine Schaltstellung und eine Neutralstellung auf.

Die Hauptgruppen-Schalteinheiten 48, 49, 50 weisen jeweils Kopplungseinheiten auf, die zu einer Herstellung einer drehmomentübertragenden Verbindung zwischen der Hauptwelle 25 und der Vorgelegewelle 24 über die entsprechende Zahnradpaarung 35, 36, 37, 38 vorgesehen sind. Die Hauptgruppen-Schalteinheiten 48, 49, 50 sind jeweils unsynchronisiert. Die Kopplungseinheiten sind als unsynchronisierte Klauenkupplungen ausgebildet. Die Hauptgruppe 11 ist als eine unsynchronisierte Klauenkupplungsgetriebegruppe ausgebildet. Zur Schaltung der Hauptgruppe 11 weist jeweils eine Hauptgruppen-Schalteinheit 48, 49, 50 jeweils eine Schaltmuffe 51, 52, 53 auf. Dabei ist die Schaltmuffe 51 der Hauptgruppen-Schalteinheit 48, die Schaltmuffe 52 der Hauptgruppen-Schalteinheit 49 und die Schaltmuffe 53 der Hauptgruppen-Schalteinheit 50 zugeordnet. Die Schaltmuffen 51, 52, 53 sind jeweils bezüglich der Hauptwelle 25 axial verschiebbar. Die Hauptgruppen-Schalteinheiten 48, 49, 50 sind jeweils druckgesteuert. Die Hauptgruppe 11 ist pneumatisch schaltbar. Grundsätzlich kann die Hauptgruppe 11 auch hydraulisch oder elektromechanisch schaltbar ausgebildet sein.

Die Nachschaltgruppe 13 ist in einer Planetenradbauweise ausgeführt. Die Nachschaltgruppe 13 weist ein Sonnenrad 54, einen Planetenradträger 55 und ein Hohlrad 56 auf. Auf dem Planetenradträger 55 sind drehbar gelagerte Planetenräder 57, 58 angeordnet, die sowohl mit dem Sonnenrad 54 als auch mit dem Hohlrad 56 kämmen. Zu einem Antrieb der Nachschaltgruppe 13 ist das Sonnenrad 54 drehfest mit der Hauptwelle 25 der Hauptgruppe 11 verbunden. Ein Abtrieb erfolgt über den Planetenradträger 55. Der Planetenradträger 55 ist drehfest mit der Getriebeausgangswelle 21 verbunden. Das Hohlrad 56 ist zur Bereitstellung einer Nachschaltgruppenübersetzung vorgesehen. Die Nachschaltgruppe 13 stellt zwei Nachschaltgruppenübersetzungen bereit. Die Nachschaltgruppe 13 übersetzt die innerhalb der Hauptgruppe 11 eingelegten Getriebegänge. Sie übersetzt die innerhalb der Hauptgruppe 11 eingelegten Getriebegänge wahlweise ins Schnelle oder ins Langsame. Die Nachschaltgruppe 13 ist als eine Rangegruppe ausgebildet. Sie ist als eine Bereichsgruppe ausgebildet.

Die Nachschaltgruppe 13 weist drei Schaltstellungen auf. Sie weist eine High-Stellung, eine Low-Stellung und eine Neutralstellung auf. In der High-Stellung stellt die Nachschaltgruppe 13 die kleinere der zwei Nachschaltgruppenübersetzungen ein. In der High-Stellung übersetzt die Nachschaltgruppe 13 den innerhalb der Hauptgruppe 11 eingelegten Getriebegang ins Schnelle. In der Low-Stellung stellt die Nachschaltgruppe 13 die größere der zwei Nachschaltgruppenübersetzungen ein. In der Low-Stellung übersetzt die Nachschaltgruppe 13 innerhalb der Hauptgruppe 11 den eingelegten Getriebegang ins Langsame. In der Neutralstellung verhindert die Nachschaltgruppe 13 eine Übertragung des Antriebsmoments auf die Getriebeausgangswelle 21. In der Neutralstellung der Nachschaltgruppe 13 sind die Hauptgruppe 11 und die Getriebeausgangswelle 21 antriebstechnisch voneinander getrennt. In der Neutralstellung trennt die Nachschaltgruppe 13 die Hauptwelle 25 antriebstechnisch von der Getriebeausgangswelle 21. In der Neutralstellung entkoppelt die Nachschaltgruppe 13 die Hauptwelle 25 von der Getriebeausgangswelle 21. In der High-Stellung weist die Nachschaltgruppe 13 eine Nachschaltgruppenübersetzung von 1 auf. In der Low-Stellung weist die Nachschaltgruppe 13 eine Nachschaltgruppenübersetzung von 4,4 auf.

Zu einer Einstellung und zu einer Änderung der Nachschaltgruppenübersetzung und damit zu einer Schaltung der Nachschaltgruppe 13 weist die Nachschaltgruppe 13 eine Nachschaltgruppen-Schalteinheit 59 auf. Zur Schaltung der High-Stellung, der Low-Stellung und der Neutralstellung weist die Nachschaltgruppen-Schalteinheit 59 eine erste Schaltstellung, eine zweite Schaltstellung und eine Neutralstellung auf. In der ersten Schaltstellung verbindet die Nachschaltgruppen-Schalteinheit 59 das Hohlrad 56 drehfest mit einem Getriebegehäuse 60. In der zweiten Schaltstellung verbindet die Nachschaltgruppen-Schalteinheit 59 das Hohlrad 56 drehfest mit der Getriebeausgangswelle 21. In der zweiten Schaltstellung rotiert das Sonnenrad 54 mit gleicher Geschwindigkeit wie der Planetenradträger 55. In der zweiten Schaltstellung ist die Nachschaltgruppe 13 in der High-Stellung geschaltet. Die Getriebeausgangswelle 21 weist damit eine gleiche Drehzahl auf wie die Hauptwelle 25. In der Neutralstellung ist das Hohlrad 56 frei drehbar und es kann kein Moment von der Nachschaltgruppe 13 auf die Getriebeausgangswelle 21 übertragen werden.

Die Nachschaltgruppe 13 ist synchronisiert ausgebildet. Sie ist synchronisiert schaltbar. Die Nachschaltgruppen-Schalteinheit 59 weist dazu nicht näher dargestellte Synchronglieder auf. Zur Schaltung der Nachschaltgruppe 13 weist die Nachschaltgruppen-Schalteinheit 59 ein Schaltelement 61 auf. Das Schaltelement 61 ist bezüglich der Getriebeausgangswelle 21 axial verschiebbar. Die Nachschaltgruppen-Schalteinheit 59 ist druckgesteuert. Die Nachschaltgruppe 13 ist pneumatisch schaltbar. Grundsätzlich kann die Nachschaltgruppe 13 auch hydraulisch oder elektromechanisch schaltbar ausgebildet sein. Grundsätzlich kann die Nachschaltgruppe 13 auch in einer Vorgelegebauweise ausgeführt sein.

Zur axialen Bewegung der Schaltmuffen 34, 51, 52, 53 und des Schaltelements 61 und damit zur Schaltung der Hauptgruppe 11, der Vorschaltgruppe 12 und der Nachschaltgruppe 13 weist die Kraftfahrzeugantriebsstrangvorrichtung eine Betätigungseinheit 62 auf. Die Betätigungseinheit 62 ist druckgesteuert. Die Betätigungseinheit 62 weist fünf Schaltstangen 63, 64, 65, 66, 67 auf. Dabei bewegt die Schaltstange 63 die Schaltmuffe 34, die Schaltstange 64 die Schaltmuffe 51, die Schaltstange 65 die Schaltmuffe 52, die Schaltstange 66 die Schaltmuffe 53 und die Schaltstange 67 das Schaltelement 61. Zur druckgesteuerten Bewegung der Schaltstangen 63, 64, 65, 66, 67 weist die Betätigungseinheit 62 fünf nicht näher dargestellte Betätigungsaktuatoren auf, wobei jeweils ein Betätigungsaktuator zur Bewegung jeweils einer Schaltstange 63, 64, 65, 66, 67 vorgesehen ist. Die Betätigungsaktuatoren sind als pneumatische Betätigungsaktuatoren ausgebildet. Grundsätzlich kann die Betätigungseinheit 62 auch eine andere, dem Fachmann als sinnvoll erscheinende Anzahl an Betätigungsaktuatoren aufweisen.

Mittels der Vorschaltgruppe 12, der Hauptgruppe 11 und der Nachschaltgruppe 13 sind 16 verschiedene Vorwärtsgetriebegänge mit unterschiedlichen Übersetzungen schaltbar. Durch Einlegen von vier verschiedenen Vorwärtsgetriebegängen innerhalb der Hauptgruppe 11 und die Übersetzung der Drehzahl der Antriebsmaschine 19 innerhalb der Vorschaltgruppe 12 werden 8 Vorwärtsgetriebegänge bereitgestellt. Durch die nachgeschaltete Nachschaltgruppe 13 wird die Zahl der zur Verfügung stehenden Vorwärtsgetriebegänge verdoppelt. Durch Schaltung der Nachschaltgruppe 13 in die High-Stellung werden die ersten 8 Vorwärtsgetriebegänge dargestellt. Durch Schaltung der Nachschaltgruppe 13 in die Low-Stellung werden die Vorwärtsgetriebegänge "9" bis "16" dargestellt. Mittels der Vorschaltgruppe 12, der Hauptgruppe 11 und der Nachschaltgruppe 13 sind weiter 2 verschiedene Rückwärtsgetriebegänge mit unterschiedlichen Übersetzungen schaltbar. Durch Einlegen von dem Rückwärtsgetriebegang innerhalb der Hauptgruppe 11 und der Übersetzung der Drehzahl der Antriebsmaschine 19 innerhalb der Vorschaltgruppe 12 werden 2 Rückwärtsgetriebegänge bereitgestellt. Die Rückwärtsgetriebegänge sind dabei nur sinnvoll, wenn die Nachschaltgruppe 13 in der High-Stellung geschaltet ist.

Das Mehrgruppengetriebe 10 weist weiter eine Synchronisiereinheit 18 auf, die zu einer Synchronisierung der Hauptgruppe 11 ein Bremsmoment bereitstellt. Die Synchronisiereinheit 18 ist zu einer Synchronisation der Vorgelegewelle 24 vorgesehen. Die Synchronisiereinheit 18 stellt das Bremsmoment zur Anpassung einer Drehzahl der Vorgelegewelle 24 an eine Drehzahl der Hauptwelle 25 ein. Die Synchronisiereinheit 18 ist an der Vorgelegewelle 24 angeordnet. Sie ist dazu vorgesehen, die Vorgelegewelle 24 abzubremsen. Die Synchronisiereinheit 18 ist zu einer Erzeugung eines auf die Vorgelegewelle 24 wirkenden Bremsmoments vorgesehen. Die Synchronisiereinheit 18 ist pneumatisch betätigbar. Die Synchronisiereinheit 18 ist als eine mechanische Wellenbremse ausgebildet. Sie ist als eine Vorgelegenwellenbremse ausgebildet. Grundsätzlich kann die Synchronisiereinheit 18 auch dazu vorgesehen sein, zur Synchronisierung der Hauptgruppe 11 alternativ oder zusätzlich auch ein Antriebsmoment bereitzustellen. Weiter ist grundsätzlich denkbar, dass die Synchronisiereinheit 18 auch hydraulisch oder elektromechanisch betätigbar ist.

Zur Einstellung und zur Änderung der Getriebegesamtübersetzung und damit zur Schaltung der Vorschaltgruppe 12, der Hauptgruppe 11 und der Nachschaltgruppe 13 weist die Kraftfahrzeugantriebsstrangvorrichtung eine Steuer- und Regeleinheit 14 auf. Die Steuerund Regeleinheit 14 ist mit der Antriebsmaschine 19, mit der Betätigungseinheit 62, mit der Anfahrkupplung 23, mit der Synchronisiereinheit 18 und mit dem Drehzahlsensor 22 kommunizierend verbunden. Zur Schaltung eines Getriebegangs schaltet die Steuer- und Regeleinheit 14 in einem Getriebegangwechselvorgang 15 die Vorschaltgruppe 12, die Hauptgruppe 11 und die Nachschaltgruppe 13 dementsprechend und steuert zur Synchronisierung der Hauptgruppe 11 die Synchronisiereinheit 18 an.

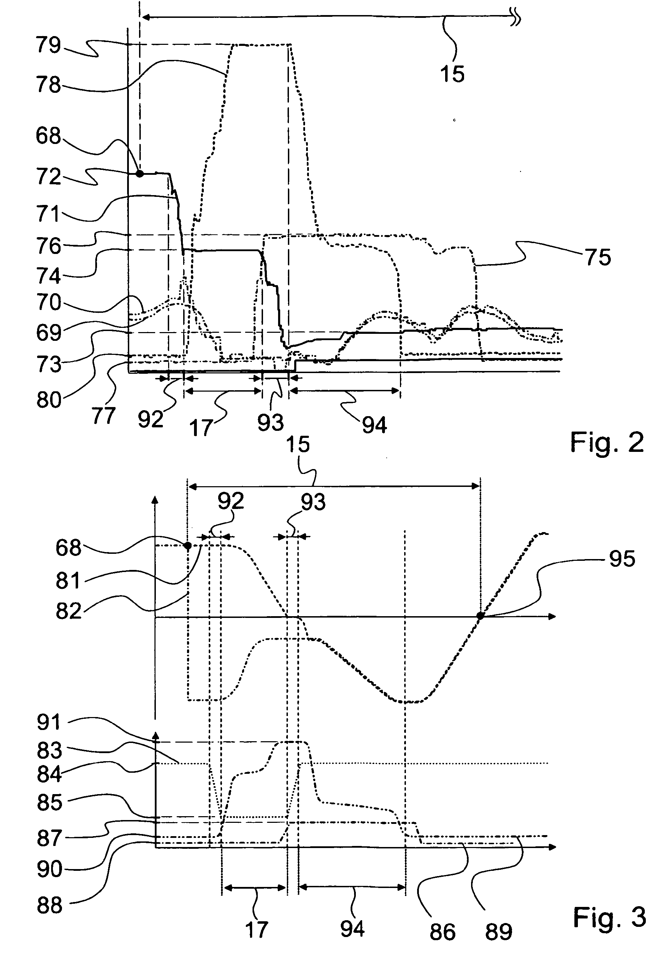

Fordert ein Fahrer des Kraftfahrzeugs während einer Fahrt ausgehend von einem aktuell geschalteten Getriebegang und damit einem Istgang einen Zielgang an, löst die Steuerund Regeleinheit 14 einen Schaltbefehl 68 aus, wodurch der Getriebegangwechselvorgang 15, in dem der Zielgang geschaltet wird, eingeleitet wird (vgl. Fig. 2 und Fig. 3). Dabei schaltet die Steuer- und Regeleinheit 14 in dem Getriebegangwechselvorgang 15 vor dem Einlegen des angeforderten Zielgangs in der Hauptgruppe 11 die Vorschaltgruppe 12 neutral. Die Steuer- und Regeleinheit 14 schaltet die Vorschaltgruppe 12 vor dem Einlegen des angeforderten Zielgangs in die Neutralstellung. Sie schaltet die Vorschaltgruppe 12 in die Neutralstellung, bevor sie den angeforderten Zielgang in der Hauptgruppe 11 einlegt. Die Steuer- und Regeleinheit 14 löst mittels der Vorschaltgruppe 12 die drehmomentübertragende Verbindung zwischen der Getriebeeingangswelle 26 und der Vorgelegewelle 24, bevor sie den angeforderten Zielgang in der Hauptgruppe 11 einlegt. Dazu steuert die Steuer- und Regeleinheit 14 zur Betätigung der Vorschaltgruppen-Schalteinheit 33 den entsprechenden Betätigungsaktuator an. Grundsätzlich kann der Vorschaltgruppe 12 eine definierte Neutralstellung fehlen, wobei die Vorschaltgruppe 12 in eine Stellung geschaltet werden kann, in der sie weder in der Low-Stellung noch in der High-Stellung und damit neutral geschaltet ist.

Die Steuer- und Regeleinheit 14 versetzt bezüglich des Schaltbefehls 68 zeitlich die neutral Schaltung der Vorschaltgruppe 12. Der Schaltbefehl 68 und ein Zeitpunkt, in dem die Vorschaltgruppe 12 neutral geschaltet wird, sind zeitlich versetzt zueiander. Die Steuerund Regeleinheit 14 verzögert in dem Getriebegangwechselvorgang 15 die neutral Schaltung der Vorschaltgruppe 12, bis die Hauptgruppe 11 wenigstens teilweise synchronisiert ist. Die Steuer- und Regeleinheit 14 schaltet die Vorschaltgruppe 12 erst nach teilweiser Synchronisation der Hauptgruppe 11 neutral. Sie schaltet die Vorschaltgruppe 12 erst in die Neutralstellung, wenn die Hauptgruppe 11 teilweise synchronisiert ist. Die Steuer- und Regeleinheit 14 schaltet in dem Getriebegangwechselvorgang 15 die Vorschaltgruppe 12 während einer Synchronisierphase 17 der Hauptgruppe 11 neutral. Sie schaltet die Vorschaltgruppe 12 neutral, während sie die Hauptgruppe 11 durch Ansteuern der Synchronisiereinheit 18 synchronisiert. Die Steuer- und Regeleinheit 14 schaltet die Vorschaltgruppe 12 innerhalb der Synchronisierphase 17 in die Neutralstellung. In der Synchronisierphase 17 werden dabei die Vorgelegewelle 24 und die Hauptwelle 25 miteinander synchronisiert.

Die Steuer- und Regeleinheit 14 verzögert in dem Getriebegangwechselvorgang 15 die neutral Schaltung der Vorschaltgruppe 12 bis kurz vor dem Einlegen des angeforderten Zielgangs. Sie schaltet die Vorschaltgruppe 12 erst unmittelbar vor dem Einlegen des angeforderten Zielgangs neutral. Die Steuer- und Regeleinheit 14 schaltet in dem Getriebegangwechselvorgang 15 die Vorschaltgruppe 12 erst kurz vor dem Einlegen des Zielgangs neutral. Sie schaltet die Vorschaltgruppe 12 am Ende der Synchronisierphase 17 neutral. In diesem Ausführungsbeispiel schaltet die Steuer- und Regeleinheit 14 die Vorschaltgruppe 12 ungefähr 0,1 Sekunden vor dem Einlegen des Zielgangs in die Neutralstellung.

Die Steuer- und Regeleinheit 14 schaltet in dem Getriebegangwechselvorgang 15 die Vorschaltgruppe 12 bei neutral geschalteter Hauptgruppe 11 neutral. Sie schaltet die Vorschaltgruppe 12 bei ausgelegtem Istgang neutral. Die Steuer- und Regeleinheit 14 schaltet die Vorschaltgruppe 12 nach dem Auslegen des Istgangs und vor dem Einlegen des Zielgangs neutral. Sie schaltet die Vorschaltgruppe 12 erst in die Neutralstellung, wenn alle Hauptgruppen-Schalteinheiten 48, 49, 50 in der Neutralstellung geschaltet sind.

Zu einer Reduzierung von Massenträgheitsmomenten bei einem Schalten der Nachschaltgruppe 13 schaltet die Steuer- und Regeleinheit 14 die Nachschaltgruppe 13 bei neutral geschalteter Vorschaltgruppe 12 in eine Zielstellung. Die Steuer- und Regeleinheit 14 schaltet in dem Getriebegangwechselvorgang 15 die Nachschaltgruppe 13 in ihre Zielstellung nach dem neutral Schalten der Vorschaltgruppe 12. Sie schaltet die Nachschaltgruppe 13 in ihre Zielstellung bei in der Neutralstellung geschalteter Vorschaltgruppe 12. Die Steuer- und Regeleinheit 14 schaltet die Nachschaltgruppe 13 in ihre Zielstellung nach dem Einlegen des angeforderten Zielgangs. In dem Getriebegangwechselvorgang 15 schaltet die Steuer- und Regeleinheit 14 die Nachschaltgruppe 13 bei eingelegtem Zielgang und neutral geschalteter Vorschaltgruppe 12 in ihre Zielstellung.

Nach der Schaltung der Nachschaltgruppe 13 in ihre Zielstellung schaltet die Steuer- und Regeleinheit 14 in dem Getriebegangwechselvorgang 15 die Vorschaltgruppe 12 in eine Zielstellung. Die Steuer- und Regeleinheit 14 schaltet in dem Getriebegangwechselvorgang 15 die neutral geschaltete Vorschaltgruppe 12 erst in ihre Zielstellung, nachdem der angeforderte Zielgang eingelegt und die Nachschaltgruppe 13 in ihrer Zielstellung geschaltet sind. Die Steuer- und Regeleinheit 14 schaltet in dem Getriebegangwechselvorgang 15 nach dem Einlegen des Zielgangs zuerst die Nachschaltgruppe 13 und dann die neutral geschaltete Vorschaltgruppe 12 in ihre Zielstellungen.

In den Figuren 2 und 3 ist der Getriebegangwechselvorgang 15 dargestellt. In dem Getriebegangwechselvorgang 15 wird ein entgegen der aktuellen Fahrtrichtung gerichteter Getriebegang geschaltet. Der Zielgang ist als der entgegen der aktuellen Fahrtrichtung gerichtete Getriebegang ausgebildet. In den Figuren 2 und 3 ist ein Getriebegangwechsel von einem Vorwärtsgetriebegang in einen Rückwärtsgetriebegang bei Vorwärtsfahrt dargestellt. In dem in der Figur 2 und 3 dargestellten Getriebegangwechselvorgang 15 sind die aktuelle Fahrtrichtung als die Vorwärtsfahrtrichtung, der aktuell eingelegte Getriebegang und damit der Istgang als ein Vorwärtsgetriebegang und der entgegen der aktuellen Fahrtrichtung gerichtete Getriebegang und damit der Zielgang, der also bei Fahrt direkt geschaltet wird, als ein Rückwärtsgetriebegang ausgebildet.

In der Figur 2 ist ein gemessener Schaltablauf während des Getriebegangwechselvorgangs 15 dargestellt. In der Figur 2 ist ein Drehzahlverlauf 69 der Vorgelegewelle 24 und ein Drehzahlverlauf 70 der Hauptwelle 25 während dem Getriebegangwechselvorgang 15 aufgetragen. Weiter ist in der Figur 2 ein Verlauf 71 aufgetragen, der einen Schaltzustand 72, 73, 74 der Hauptgruppe 11 beschreibt, wobei der Schaltzustand 72 einem innerhalb der Hauptgruppe 11 eingelegten Istgang, der Schaltzustand 73 einem innerhalb der Hauptgruppe 11 eingelegten Zielgang und der Schaltzustand 74 einer Neutralstellung der Hauptgruppe 11, in der die Hauptgruppe 11 neutral geschaltet ist, entspricht. Ein in der Figur 2 aufgetragener Verlauf 75 beschreibt einen Schaltzustand 76, 77 der Vorschaltgruppe 12, wobei der Schaltzustand 76 der Neutralstellung der Vorschaltgruppe 12 und der Schaltzustand 77 der Low-Stellung der Vorschaltgruppe 12 entspricht. Außerdem ist in der Figur 2 ein Verlauf 78 aufgetragen, der einen Schaltzustand 79, 80 der Nachschaltgruppe 13 beschreibt, wobei der Schaltzustand 79 der High-Stellung und der Schaltzustand 80 der Low-Stellung der Nachschaltgruppe 13 entspricht.

In der Figur 3 ist ein prinzipieller Schaltablauf des Getriebegangwechselvorgangs 15 dargestellt. In der Figur 3 ist ein Drehzahlverlauf 81 der Vorgelegewelle 24 und ein Drehzahlsollverlauf 82 der Hauptwelle 25 während dem Getriebegangwechselvorgang 15 aufgetragen. Der Drehzahlsollverlauf 82 stellt dabei einen mit einer Sollübersetzung der Hauptgruppe 11 übersetzten Drehzahlverlauf der Hauptwelle 25 dar, wobei die Sollübersetzung eine dem Zielgang zugeordnete und somit eine zu schaltende Übersetzung darstellt. Weiter ist in der Figur 3 ein Verlauf 83 aufgetragen, der einen Schaltzustand 84, 85 der Hauptgruppe 11 beschreibt, wobei der Schaltzustand 84 einem innerhalb der Hauptgruppe 11 eingelegten Getriebegang und der Schaltzustand 85 einer Neutralstellung der Hauptgruppe 11, in der die Hauptgruppe 11 neutral geschaltet ist, entspricht. Ein in der Figur 3 aufgetragener Verlauf 86 beschreibt einen Schaltzustand 87, 88 der Vorschaltgruppe 12, wobei der Schaltzustand 87 der Neutralstellung der Vorschaltgruppe 12 und der Schaltzustand 88 der Low-Stellung der Vorschaltgruppe 12 entspricht. Außerdem ist in der Figur 3 ein Verlauf 89 aufgetragen, der einen Schaltzustand 90, 91 der Nachschaltgruppe 13 beschreibt, wobei der Schaltzustand 90 der Low-Stellung und der Schaltzustand 91 der High-Stellung der Nachschaltgruppe 13 entspricht.

Im Folgenden wird der Getriebegangwechselvorgang 15 in Bezug zu den Figuren 2 und 3 erläutert. Ausgehend von einem vorwärtsrollenden Kraftfahrzeug, in dem ein Vorwärtsgetriebegang geschaltet ist, fordert der Fahrer des Kraftfahrzeugs mittels eines Wählhebels einen Rückwärtsgetriebegang und damit den als der entgegen der aktuellen Fahrtrichtung gerichtete Getriebegang ausgebildeten Zielgang an. Der Fahrer betätigt den Wählhebel bei Fahrt ausgehend von einer Vorwärtsfahrstufe "D" in eine Rückwärtsfahrstufe "R". Der Fahrer fordert einen Fahrtrichtungswechsel an. Dadurch löst die Steuer- und Regeleinheit 14 den Schaltbefehl 68 aus, wodurch der Getriebegangwechselvorgang 15, in dem der Zielgang geschaltet wird, eingeleitet wird. Vor dem Schaltbefehl 68 weisen der Drehzahlverlauf 81 der Vorgelegewelle 24 und der Drehzahlsollverlauf 82 der Hauptwelle 25 gemäß Figur 3 ein gleiches Vorzeichen auf, da die Vorgelegewelle 24 und die Hauptwelle 25 eine für den Istgang und damit den Vorwärtsgetriebegang richtige Drehrichtung aufweisen. Durch den Schaltbefehl 68 ändert sich eine Solldrehrichtung der Hauptwelle 25, da der Rückwärtsgetriebegang angefordert wurde. Dadurch ändert sich das Vorzeichen des Drehzahlsollverlaufs 82, da die Hauptwelle 25 noch eine für den Rückwärtsgetriebegang falsche Drehrichtung aufweist.

Nach dem Schaltbefehl 68 öffnet die Steuer- und Regeleinheit 14 die Anfahrkupplung 23 und schaltet zum Auslegen des als Vorwärtsgetriebegang ausgebildeten Istgangs die Hauptgruppe 11. Die Steuer- und Regeleinheit 14 legt den Istgang in einer Auslegephase 92 aus und schaltet damit die Hauptgruppe 11 neutral, wie aus den Verläufen 71, 83 ersichtlich ist. Die Auslegephase 92 ist innerhalb des Getriebegangwechselvorgangs 15 angeordnet. Anschließend schaltet die Steuer- und Regeleinheit 14 zur Synchronisation der Hauptgruppe 11 die Nachschaltgruppe 13. Die Steuer- und Regeleinheit 14 schaltet die Nachschaltgruppe 13 zu einer Drehzahlreduzierung der Hauptwelle 25. Sie schaltet die Nachschaltgruppe 13 von der Low-Stellung in die High-Stellung, wie aus den Verläufen 78, 89 ersichtlich ist. Die Steuer- und Regeleinheit 14 schaltet die Nachschaltgruppe 13 zur Synchronisation der Hauptgruppe 11 in die High-Stellung nach dem Auslegen des Istgangs. Sie schaltet die Nachschaltgruppe 13 in der Synchronisierphase 17. Die Synchronisierphase 17 ist innerhalb des Getriebegangwechselvorgangs 15 angeordnet. Innerhalb der Synchronisierphase 17 ist die Hauptgruppe 11 neutral geschaltet. Es ist kein Getriebegang innerhalb der Hauptgruppe 11 während der Synchronisierphase 17 eingelegt. Durch die Schaltung der Nachschaltgruppe 13 in die High-Stellung wird die Hauptwelle 25 durch die Nachschaltgruppe 13 abgebremst und dadurch mit der Vorgelegewelle 24 synchronisiert.

Zusätzlich wird die Vorgelegewelle 24 während der Synchronisierphase 17 mittels der Synchronisiereinheit 18 auf Null abgebremst. Dazu steuert die Steuer- und Regeleinheit 14 die Synchronisiereinheit 18 innerhalb der Synchronisierphase 17 an. Die Hauptgruppe 11 wird während der Synchronisierphase 17 durch die Nachschaltgruppe 13 und die Synchronisiereinheit 18 synchronisiert. Während der Synchronisierphase 17 steuert die Steuer- und Regeleinheit 14 die Vorschaltgruppe 12 an. Die Steuer- und Regeleinheit 14 schaltet die Vorschaltgruppe 12 während der Synchronisierphase 17, bevor sie den als der Rückwärtsgetriebegang ausgebildeten Zielgang einlegt, neutral. Die Vorschaltgruppe 12 wird während der Synchronisierphase 17 vor dem Einlegen des Zielgangs neutral geschaltet. Die Steuer- und Regeleinheit 14 schaltet die Vorschaltgruppe 12 erst bei teilweise synchronisierter Hauptgruppe 11. Sie schaltet die Vorschaltgruppe 12 vor Beendigung der Synchronisierphase 17, und damit bevor sie den Zielgang einlegt, neutral und damit in die Neutralstellung. Die Vorschaltgruppe 12 wird erst nach teilweiser Synchronisation der Hauptgruppe 11 neutral geschaltet. Die Vorschaltgruppe 12 wird erst kurz vor dem Einlegen des Zielgangs neutral geschaltet. Durch das Abbremsen der Vorgelegewelle 24 auf Null und eine vollständige Schaltung der Nachschaltgruppe 13 in die High-Stellung ist die Synchronisierphase 17 beendet.

Nach der Synchronisierphase 17 schaltet die Steuer- und Regeleinheit 14 zum Einlegen des Zielgangs die Hauptgruppe 11. Der Zielgang wird erst nach dem neutral Schalten der Vorschaltgruppe 12 eingelegt. Die Steuer- und Regeleinheit 14 legt den Zielgang in einer Einlegephase 93 ein, wie aus den Verläufen 71, 83 ersichtlich ist. Die Einlegephase 93 ist innerhalb des Getriebegangwechselvorgangs 15 angeordnet. Die Synchronisierphase 17 ist entlang des Getriebegangwechselvorgangs 15 zwischen der Auslegephase 92 und der Einlegephase 93 angeordnet. Die Steuer- und Regeleinheit 14 legt den Zielgang bei neutral geschalteter Vorschaltgruppe 12 und in der High-Stellung geschalteter Nachschaltgruppe 13 ein. Während der Einlegephase 93 ist die Vorschaltgruppe 12 in der Neutralstellung und die Nachschaltgruppe 13 in der High-Stellung geschaltet. Nach dem Einlegen des als Rückwärtsgetriebegang ausgebildeten Zielgangs erfährt die Vorgelegewelle 24 eine Drehrichtungsumkehr, wodurch sich das Vorzeichen des Drehzahlverlaufs 81 ändert.

Nach der Einlegephase 93 und damit nach dem Einlegen des Zielgangs schaltet die Steuer- und Regeleinheit 14 die Nachschaltgruppe 13 in ihre Zielstellung. Die Steuer- und Regeleinheit 14 schaltet die Nachschaltgruppe 13 nach dem Einlegen des Zielgangs zurück. Die Steuer- und Regeleinheit 14 schaltet in einer Schaltphase 94 die Nachschaltgruppe 13 von der High-Stellung wieder in die Low-Stellung, wie aus den Verläufen 75, 89 ersichtlich ist. Sie schaltet die Nachschaltgruppe 13 zur Schaltung des Zielgangs in ihre Zielstellung. Die Schaltphase 94 ist innerhalb des Getriebegangwechselvorgangs 15 angeordnet. Während der Schaltphase 94 ist die Vorschaltgruppe 12 neutral geschaltet und der Zielgang innerhalb der Hauptgruppe 11 eingelegt. Die Nachschaltgruppe 13 wird bei neutral geschalteter Vorschaltgruppe 12 und eingelegtem Zielgang in die Zielstellung geschaltet.

Nach dem Schalten der Nachschaltgruppe 13 in ihre Zielstellung schaltet die Steuer- und Regeleinheit 14 die Vorschaltgruppe 12 in ihre Zielstellung. Sie schaltet die Vorschaltgruppe 12 nach dem Schalten der Nachschaltgruppe 13 zurück. Die Steuer- und Regeleinheit 14 schaltet die Vorschaltgruppe 12 nach der Schaltphase 94, in der die Nachschaltgruppe 13 in die Zielstellung geschaltet wurde, von der Neutralstellung in die Low-Stellung. Die Vorschaltgruppe 12 wird erst nach dem Schalten der Nachschaltgruppe 13 in ihre Zielstellung geschaltet. Nach dem Einlegen des Zielgangs wird zuerst die Nachschaltgruppe 13 und dann die neutral geschaltete Vorschaltgruppe 12 in ihre Zielstellung geschaltet. Nach dem Schalten der Nachschaltgruppe 13 in ihre Zielstellung und nach dem Schalten der Vorschaltgruppe 12 in ihre Zielstellung schließt die Steuer- und Regeleinheit 14 in einem Schließpunkt 95 die Anfahrkupplung 23, wodurch der als der Rückwärtsgetriebegang ausgebildete Zielgang geschaltet und der Fahrtrichtungswechsel erfolgt ist. Nach dem Schließpunkt 95 weisen der Drehzahlverlauf 81 und der Drehzahlsollverlauf 82 ein positives Vorzeichen auf, da sie für den Zielgang und damit den Rückwärtsgetriebegang jeweils die richtige Drehrichtung aufweisen. Durch Schließen der Anfahrkupplung 23 und damit nach dem Schließpunkt 95 ist der Getriebegangwechselvorgang 15 beendet. Der Schließpunkt 95 ist dabei in der Figur 2 nicht dargestellt. Grundsätzlich kann auf die Schaltung der Nachschaltgruppe 13 zur Synchronisation der Hauptgruppe 11 verzichtet werden. Der Getriebegangwechselvorgang 15 kann grundsätzlich auch als ein normaler Getriebegangwechsel, d.h. als kein Fahrtrichtungsvorgang ausgebildet sein, in dem zwischen Vorwärtsgetriebegängen oder Rückwärtsgetriebegängen umgeschaltet wird, wie beispielsweise ein Getriebegangwechselvorgang, in dem von einem dritten Vorwärtsgetriebegang in den vierten Vorwärtsgetriebegang geschaltet wird. Der Schaltablauf während dem normalen Getriebegangwechsel ist analog zu oben ausgebildet, wobei auf die Schaltung der Nachschaltgruppe 13 in die High-Stellung verzichtet wird. Dabei kann die Nachschaltgruppe 13 ebenfalls vor dem Einlegen des Zielgangs neutral geschaltet werden.

Es wird explizit darauf hingewiesen, dass in diesem Ausführungsbeispiel die neutral Schaltung der Vorschaltgruppe 12 durch das Schalten der Vorschaltgruppe 12 in die Neutralstellung realisiert ist. Das neutral Schalten kann aber auch bei fehlender Neutralstellung der Vorschaltgruppe 12 realisiert werden, indem die Vorschaltgruppe 12 in eine Stellung geschaltet wird, in der weder die Low-Stellung noch die High-Stellung geschaltet ist.

In diesem Ausführungsbeispiel schaltet die Steuer- und Regeleinheit 14 vor dem Einlegen des Zielgangs lediglich die Vorschaltgruppe 12 neutral. Es wird explizit noch einmal darauf hingewiesen, dass die Nachschaltgruppe 13 zusätzlich oder alternativ vor dem Einlegen des Zielgangs neutral geschaltet werden kann. Das neutral Schalten der Nachschaltgruppe 13 erfolgt dabei analog zum neutral Schalten der Vorschaltgruppe 12. Weiter ist es grundsätzlich denkbar, dass die Steuer- und Regeleinheit 14 eine Schaltstrategie, in der lediglich die Vorschaltgruppe 12 neutral geschaltet wird, und eine Schaltstrategie, in der die Vorschaltgruppe 12 und die Nachschaltgruppe 13 neutral geschaltet werden, aufweist. Ob die Steuer- und Regeleinheit 14 lediglich die Vorschaltgruppe 12 oder die Vorschaltgruppe 12 und zusätzlich die Nachschaltgruppe 13 neutral schaltet, bevor der Zielgang eingelegt ist, hängt dabei beispielsweise von dem angeforderten Zielgang ab. Ist der Zielgang beispielsweise als ein der aktuellen Fahrtrichtung gleichgerichteter Getriebegang ausgebildet, d.h. wird zwischen Vorwärtsgetriebegängen oder zwischen Rückwärtsgetriebegängen umgeschaltet, wie beispielsweise von einem dritten Vorwärtsgetriebegang in einen vierten Vorwärtsgetriebegang, schaltet die Steuer- und Regeleinheit 14 die Vorschaltgruppe 12 und die Nachschaltgruppe 13 neutral. Ist der Zielgang als ein der aktuellen Fahrtrichtung entgegen gerichteter Getriebegang ausgebildet und wird dadurch entweder ausgehend von dem Vorwärtsgetriebegang in den Rückwärtsgetriebegang oder von dem Rückwärtsgetriebegang in den Vorwärtsgetriebegang bei Fahrt geschaltet, schaltet die Steuer- und Regeleinheit 14 vor dem Einlegen des Zielgangs lediglich die Vorschaltgruppe 12 neutral und nutzt die Nachschaltgruppe 13 zur Synchronisation der Hauptgruppe 11.

## Patentansprüche

1. Kraftfahrzeugantriebsstrangvorrichtung mit einem Mehrgruppengetriebe (10), das eine Hauptgruppe (11), eine der Hauptgruppe (11) vorgeschaltete Vorschaltgruppe (12) und eine der Hauptgruppe (11) nachgeschaltete Nachschaltgruppe (13) aufweist, und einer Steuer- und/oder Regeleinheit (14), die dazu vorgesehen ist, zumindest in einem Getriebegangwechselvorgang (15) vor einem Einlegen eines Zielgangs in der Hauptgruppe (11) die Vorschaltgruppe (12) und/oder die Nachschaltgruppe (13) neutral zu schalten,
wobei die Steuer- und/oder Regeleinheit (14) dazu vorgesehen ist, in dem Getriebegangwechselvorgang (15) die Vorschaltgruppe (12) und/oder die Nachschaltgruppe (13) erst nach zumindest teilweiser Synchronisation der Hauptgruppe (11) neutral zu schalten,
**dadurch gekennzeichnet, dass**
die Steuer- und/oder Regeleinheit (14) dazu vorgesehen ist, in dem Getriebegangwechselvorgang (15) die Nachschaltgruppe (13) bei neutral geschalteter Vorschaltgruppe (12) zu schalten.

2. Kraftfahrzeugantriebsstrangvorrichtung nach Anspruch 1,
**dadurch gekennzeichnet, dass**
die Steuer- und/oder Regeleinheit (14) dazu vorgesehen ist, in dem Getriebegangwechselvorgang (15) die Vorschaltgruppe (12) und/oder die Nachschaltgruppe (13) erst kurz vor dem Einlegen des Zielgangs neutral zu schalten.

3. Kraftfahrzeugantriebsstrangvorrichtung nach Anspruch 1 oder 2,
**dadurch gekennzeichnet, dass**
der Zielgang ein entgegen einer aktuellen Fahrtrichtung gerichteter Getriebegang ist.

4. Kraftfahrzeugantriebsstrangvorrichtung nach einem der vorhergehenden Ansprüche,
**dadurch gekennzeichnet, dass**
die Steuer- und/oder Regeleinheit (14) dazu vorgesehen ist, in dem Getriebegangwechselvorgang (15) die Vorschaltgruppe (12) und/oder die Nachschaltgruppe (13) während einer Synchronisierphase (17) der Hauptgruppe (11) neutral zu schalten.

5. Kraftfahrzeugantriebsstrangvorrichtung nach einem der vorhergehenden Ansprüche,
**dadurch gekennzeichnet, dass**
die Steuer- und/oder Regeleinheit (14) dazu vorgesehen ist, in dem Getriebegangwechselvorgang (15) nach dem Einlegen des Zielgangs zuerst die Nachschaltgruppe (13) und dann die Vorschaltgruppe (12) in eine Zielstellung zu schalten.

6. Kraftfahrzeugantriebsstrangvorrichtung nach einem der vorhergehenden Ansprüche,
**dadurch gekennzeichnet, dass**
die Steuer- und/oder Regeleinheit (14) dazu vorgesehen ist, in dem Getriebegangwechselvorgang (15) die Vorschaltgruppe (12) und/oder die Nachschaltgruppe (13) bei neutral geschalteter Hauptgruppe (11) neutral zu schalten.

7. Kraftfahrzeugantriebsstrangvorrichtung nach einem der vorhergehenden Ansprüche,
**gekennzeichnet durch**
eine Synchronisiereinheit (18), die dazu vorgesehen ist, zu einer Synchronisierung der Hauptgruppe (11) ein Brems- und/oder ein Antriebsmoment bereitzustellen.

8. Kraftfahrzeugantriebsstrangvorrichtung nach einem der vorhergehenden Ansprüche,
**dadurch gekennzeichnet, dass**
die Hauptgruppe (11) als eine unsynchronisierte Klauenkupplungsgetriebegruppe ausgebildet ist.

9. Kraftfahrzeugantriebsstrangvorrichtung nach einem der vorhergehenden Ansprüche,
**dadurch gekennzeichnet, dass**
die Vorschaltgruppe (12) und/oder die Nachschaltgruppe (13) synchronisiert ausgebildet sind.

10. Schaltverfahren für ein Mehrgruppengetriebe (10) einer Kraftfahrzeugantriebsstrangvorrichtung, insbesondere einer Kraftfahrzeugantriebsstrangvorrichtung nach einem der vorhergehenden Ansprüche, in dem zumindest in einem Getriebegangwechselvorgang (15) vor einem Einlegen eines Zielgangs in einer Hauptgruppe (11) eine Vorschaltgruppe (12) und/oder eine Nachschaltgruppe (13) neutral geschaltet werden,
wobei in dem Getriebegangwechselvorgang (15) die Vorschaltgruppe (12) und/oder die Nachschaltgruppe (13) erst nach zumindest teilweiser Synchronisation der Hauptgruppe (11) neutral geschaltet werden,
**dadurch gekennzeichnet, dass**
in dem Getriebegangwechselvorgang (15) die Nachschaltgruppe (13) bei neutral geschalteter Vorschaltgruppe (12) geschaltet wird.

## Claims

1. Motor vehicle drive train device with a multi-group transmission (10) which has a main group (11), an upstream group (12) arranged upstream of the main group (11) and a downstream group (13) arranged downstream of the the main group (11), and with a control and / or regulating unit (14) which is provided, at least in a gear change operation (15), before engaging a target gear in the main group (11), to shift the upstream group (12) and / or the downstream group (13) into neutral,
wherein the control and / or regulating unit (14) is provided, in the gear change operation (15), to shift the upstream group (12) and / or the downstream group (13) into neutral only after at least partial synchronisation of the main group (11),
**characterised in that**
the control and / or regulating unit (14) is provided, in the gear change operation (15), to shift the downstream group (13) when the upstream group (12) is shifted into neutral.

2. Motor vehicle drive train device according to claim 1,
**characterised in that**
the control and / or regulating unit (14) is provided, in the gear change operation (15), to shift the upstream group (12) and / or the downstream group (13) into neutral only shortly before the target gear is engaged.

3. Motor vehicle drive train device according to claim 1 or 2,
**characterised in that**
the target gear is a gear orientated contrary to the current direction of travel.

4. Motor vehicle drive train device according to one of the preceding claims,
**characterised in that**
the control and / or regulating unit (14) is provided, in the gear change operation (15), to shift the upstream group (12) and / or the downstream group (13) into neutral during a synchronisation phase (17) of the main group (11).

5. Motor vehicle drive train device according to one of the preceding claims,
**characterised in that**
the control and / or regulating unit (14) is provided, in the gear change operation (15), after the target gear has been engaged, firstly to shift the downstream group (13) and then the upstream group (12) into a target position.

6. Motor vehicle drive train device according to one of the preceding claims,
**characterised in that**
the control and / or regulating unit (14) is provided, in the gear change operation (15), to shift the upstream group (12) and / or the downstream group (13) into neutral when the main group (11) is shifted into neutral.

7. Motor vehicle drive train device according to one of the preceding claims,
**characterised by**
a synchronisation unit (18) which is provided, for a synchronisation of the main group (11), to provide a braking and / or a driving torque,

8. Motor vehicle drive train device according to one of the preceding claims,
**characterised in that**
the main group (11) is designed as a non-synchronised claw clutch transmission group.

9. Motor vehicle drive train device according to one of the preceding claims,
**characterised in that**
the upstream group (12) and / or the downstream group (13) is / are designed synchronised.

10. Shift method for a multi-group transmission (10) of a motor vehicle drive train device, in particular a motor vehicle drive train device according to one of the preceding claims, in which, at least in a gear change operation (15), before engaging a target gear in a main group (11), an upstream group (12) and / or a downstream group (13) is / are shifted into neutral,
wherein in the gear change operation (15) the upstream group (12) and / or the downstream group (13) is / are shifted into neutral only after at least partial synchronisation of the main group (11),
**characterised in that**
in the gear change operation (15) the downstream group (13) is shifted when the upstream group (12) is shifted into neutral.

## Revendications

1. Dispositif de train de roulement de véhicule automobile comprenant une boîte de vitesses multigroupe qui comporte un groupe principal (11), un groupe de tête (12) disposée en amont du groupe principal (11) et un groupe aval (13) disposé en aval du groupe principal (11), et une unité de réglage et/ou de commande (14) qui est prévue pour placer en position neutre le groupe de tête (12) et/ou le groupe aval au cours d'un processus de changement de rapport de transmission (15) avant l'enclenchement d'un rapport cible dans le groupe principal (11), l'unité de réglage et/ou de commande (14) étant prévue pour placer en position neutre le groupe de tête (12) et/ou le groupe aval (13) au cours d'un processus de changement de rapport de transmission (15) après au moins une synchronisation partielle du groupe principal (11), **caractérisé en ce que** l'unité de réglage et/ou de commande (14) est prévue pour commuter le groupe aval (13) au cours d'un processus de changement de rapport de transmission (15) lorsque le groupe de tête (12) est placée en position neutre.

2. Dispositif de train de roulement de véhicule automobile selon la revendication 1, **caractérisé en ce que** l'unité de réglage et/ou de commande (14) étant prévue pour placer en position neutre le groupe de tête (12) et/ou le groupe aval (13) au cours d'un processus de changement de rapport de transmission (15) peu avant l'enclenchement du rapport cible.

3. Dispositif de train de roulement de véhicule automobile selon la revendication 1 ou la revendication 2, **caractérisé en ce que** le rapport cible est un rapport de transmission orienté à l'opposé d'une direction réelle de marche.

4. Dispositif de train de roulement de véhicule automobile selon l'une quelconque des revendications précédentes, **caractérisé en ce que** l'unité de réglage et/ou de commande (14) étant prévue pour placer en position neutre le groupe de tête (12) et/ou le groupe aval (13) au cours d'un processus de changement de rapport de transmission (15) pendant une phase de synchronisation (17) du groupe principal (11).

5. Dispositif de train de roulement de véhicule automobile selon l'une quelconque des revendications précédentes, **caractérisé en ce que** l'unité de réglage et/ou de commande (14) est prévue pour commuter d'abord le groupe aval (13) et ensuite le groupe de tête (12) dans une position cible après l'enclenchement du rapport cible.

6. Dispositif de train de roulement de véhicule automobile selon l'une quelconque des revendications précédentes, **caractérisé en ce que** l'unité de réglage et/ou de commande (14) étant prévue pour placer en position neutre le groupe de tête (12) et/ou le groupe aval (13) au cours d'un processus de changement de rapport de transmission (15) lorsque le groupe principal (11) est placé en position neutre.

7. Dispositif de train de roulement de véhicule automobile selon l'une quelconque des revendications précédentes, **caractérisé en ce qu'**une unité de synchronisation (18), qui est prévue pour préparer un moment d'entraînement et/ou de freinage par rapport à une synchronisation du groupe principal (11).

8. Dispositif de train de roulement de véhicule automobile selon l'une quelconque des revendications précédentes, **caractérisé en ce que** le groupe principal (11) est conçu comme un groupe de transmission à accouplement à dents.

9. Dispositif de train de roulement de véhicule automobile selon l'une quelconque des revendications précédentes, **caractérisé en ce que** le groupe de tête (12) et ou le groupe en aval (13) sont synchronisés.

10. Procédé de commutation pour une boîte de vitesses multigroupe (10) d'un dispositif de train de roulement de véhicule automobile, en particulier un dispositif de train de roulement de véhicule automobile selon l'une quelconque des revendications précédentes, au moins au cours d'un processus de changement de rapport de transmission (15) avant l'enclenchement d'un rapport cible dans le groupe principal (11), un groupe de tête (12) et/ou un groupe en aval (13) sont placés en position neutre, **caractérisé en ce que** dans au cours du processus de changement de rapport de transmission (15) le groupe en aval est commuté lorsque le groupe de tête (12) est placée en position neutre.
